# EUROPÄISCHE PATENTSCHRIFT

(11) **EP 0 944 654 B1**
(45) Veröffentlichungstag und Bekanntmachung des Hinweises auf die Patenterteilung: **20.03.2002**
(21) Anmeldenummer: 97954344.4
(22) Anmeldetag: 01.12.1997
(51) Int. Cl.: C08F 20/12, C08L 53/00, C08F 287/00

(54) **ANIONISCHE POLYMERISATION VON ACRYLATEN UND METHACRYLATEN**
ANIONIC POLYMERISATION OF ACRYLATES AND METHACRYLATES
POLYMERISATION ANIONIQUE D'ACRYLATES ET DE METHACRYLATES

(30) Priorität: 10.12.1996 DE 19651299
(43) Veröffentlichungstag der Anmeldung: 29.09.1999
(73) Patentinhaber: BASF AKTIENGESELLSCHAFT, 67056 Ludwigshafen (DE)
(72) Erfinder: JÜNGLING, Stephan, D-68165 Mannheim (DE); GAUSEPOHL, Hermann, D-67112 Mutterstadt (DE); WARZELHAN, Volker, D-67273 Weisenheim (DE); MCKEE, Graham, Edmund, D-67433 Neustadt (DE); FISCHER, Michael, D-67071 Ludwigshafen (DE)
(86) Internationale Anmeldenummer: EP9706711
(87) Internationale Veröffentlichungsnummer: WO9825975

(56) Entgegenhaltungen:
- EP-A- 0 524 054
- FR-A- 2 131 111

## Beschreibung

Die vorliegende Erfindung betrifft ein Verfahren zur Herstellung von Homo-, Co- oder Blockcopolymerisaten, enthaltend Acrylate oder Methacrylate, mittels anionischer Polymerisation sowie die Verwendung der erhaltenen Reaktionsgemische für die radikalische Polymerisation.

Verfahren zur Herstellung von Polymerisaten aus Acrylaten und Methacrylaten mittels anionischer Polymerisation sind hinlänglich bekannt. Eine Übersicht findet sich z.B. im J.M.S.-Rev. Macromol. Chem. Phys., 1994, C34, S. 243-324.

Als wirksame Initiatoren für die anionische Polymerisation haben sich z.B. Systeme auf der Basis von Lithiumorganylen und Alkoxyalkoxiden sowie Lanthanoidmetallocenverbindungen bewährt. Die EP-A 0 524 054 beschreibt die Polymerisation von z.B. 2-Ethylhexylacrylat in Gegenwart von Lithiumdiphenylmethylid als Initiator und CH₃(OCH₂CH₂)₂OLi als Additiv. In den JP-A 2258808, JP-A 6306112 und JP-A 6093049 findet sich die Polymerisation von Acrylaten und Methacrylaten mit Hilfe von Lanthanoidmetallocenen, wie (C₅Me₅)₂Sm(THF)₂, beschrieben.

Alle bekannten anionischen Polymerisationsverfahren sind auf die Verwendung eines inerten Lösungsmittels angewiesen, u.a. um eine frühzeitige Kettenterminierung zu unterbinden. Sehr häufig bilden bei der anionischen Polymerisation Tetrahydrofuran (THF), Toluol oder Ethylbenzol oder beliebige Gemische dieser Komponenten ein geeignetes Reaktionsmedium. Nachteilig bei der Verwendung letztgenannter Lösungsmittel insbesondere auch bei der Samaroceninitiierten anionischen Polymerisation ist die vor allem am Ende der Polymerisation eintretende verstärkte Gelbildung, die einer unproblematischen Aufarbeitung und folglich auch einer Übertragung auf eine Herstellung im industriellen Maßstab entgegensteht. Darüber hinaus führt dieses Phänomen häufig zu breiten Molekulargewichtsverteilungen und unvollständigem Monomerumsatz.

Der vorliegenden Erfindung lag daher die Aufgabe zugrunde, ein Reaktionsmedium für die anionische Polymerisation zu entwickeln, das die genannten Nachteile nicht aufweist und das darüber hinaus unabhängig vom verwendeten Initiatorsystem und von der Ansatzgröße reproduzierbar gute Polymerisationsresultate liefert.

Demgemäß wurde ein Verfahren zur Herstellung von Reaktionsgemischen, umfassend Homo-, Co- oder Blockcopolymerisate, und von Homo-, Co- und Blockcopolymerisaten, enthaltend Acrylate oder Methacrylate oder Acrylate und Methacrylate mittels anionischer Polymerisation gefunden, bei dem als Lösungsmittel oder als Lösungsmittelkomponenten olefinisch ungesättigte Verbindungen eingesetzt werden, die nicht ein Acrylat- oder Methacrylatderivat sind. In einer bevorzugten Ausführungsform werden als Lösungsmittel oder Lösungsmittelkomponente vinylaromatische Verbindungen eingesetzt.

Grundsätzlich kommen ungesättigte olefinische Verbindungen in Frage, die unter die allgemeine Formel (I) fallen:

(R^{a}) (R^{b})C = C' (R^{c}) (R^{d}) (I),

in der die Substituenten die nachfolgende Bedeutung haben:
- R^{a}, R^{b}: unabhängig voneinander, Wasserstoff, C₁- bis C₁₄-Alkyl in geradkettiger und verzweigter Form, auch substituiert, wie Methyl, Ethyl, i-Propyl, n-Propyl, i-Butyl, n-Butyl, t-Butyl, C₆- bis C₁₄-Aryl, auch einfach oder mehrfach substituiert, wie Phenyl oder Tolyl, C₃- bis C₇-Cycloalkyl, auch substituiert, wie Cyclopropyi, Cyclopentyl oder Cyclohexyl, C₂- bis C₁₀-Alkenyl, wie Vinyl, Allyl, Butenyl oder Butadienyl, und
- R^{c}, R^{d}: unabhängig voneinander, Wasserstoff, C₁- bis C₁₄-Alkyl in geradkettiger und verzweigter Form, auch substituiert, wie Methyl, Ethyl, i-Propyl, n-Propyl, i-Butyl, n-Butyl, t-Butyl, C₆- bis C₁₄-Aryl, auch einfach oder mehrfach substituiert, wie Phenyl oder Tolyl, C₃- bis C₇-Cycloalkyl, auch substituiert, wie Cyclopropyl, Cyclopentyl oder Cyclohexyl, C₂- bis C₁₀-Alkenyl, wie Vinyl, Allyl, Butenyl oder Butadienyl, oder gemeinsam mit C' Cyclopropyl, Cyclopentyl, Cyclohexyl, auch einfach- oder mehrfach substituiert.

Als olefinisch ungesättigte Verbindungen sind beispielsweise geeignet Ethylen, Propylen, 1-Buten, 2-Buten, Butadien, 1,4-Hexadien, 1,5-Hexadien oder 1-Octen. Ebenfalls können die Reste R^{a}, R^{b} bzw. R^{c}, R^{d} sowie die Reste R^{a}, R^{c} bzw. R^{b}, R^{d} jeweils einen ungesättigten Carbo- oder Heterocyclus bilden, wie Cyclopenten, Cyclohexen, Cyclopropyliden, Cyclopentyliden oder Fulven.

Als Lösungsmittel oder Lösungsmittelkomponenten für das erfindungsgemäße Verfahren sind unter den vinylaromatischen Verbindungen z.B. Styrol, α-Methylstyrol, o-, m-, p-Methylstyrol oder beliebige Gemische der genannten vinylaromatischen Verbindungen besonders geeignet. Bevorzugt werden als Lösungsmittel oder als Lösungsmittelkomponente Styrol, aber auch Butadien und Ethen verwendet, besonders bevorzugt ist Styrol. Bilden vinylaromatische Verbindungen bzw. die ungesättigten Verbindungen nach Anspruch 1 eine Komponente eines Lösungsmittelsystems, dann liegt der Anteil dieser Komponente, bezogen auf die Gesamtlösungsmittelmenge, bevorzugt im Bereich von 5 bis 99 Vol.-%.

Daneben können als weitere Lösungsmittelbestandteile beispielsweise Tetrahydrofuran, Diethylether, Dimethoxyethan, Toluol, Ethylbenzol, Cyclohexan oder ein beliebiges Gemisch der genannten Lösungsmittel eingesetzt werden. Geeignete Lösungsmittelsysteme sind z.B. Styrol/Tetrahydrofuran, Styrol/Toluol oder Styrol/Tetrahydrofuran/Ethylbenzol.

Grundsätzlich kommen jedoch alle inerten, aprotischen, polaren und unpolaren Lösungsmittel als weitere Lösungsmittelkomponente in Frage.

Mit dem erfindungsgemäßen Verfahren sind sowohl Homopolymerisate als auch Co- oder Blockcopolymerisate enthaltend Acrylate oder Methacrylate zugänglich. Es können z.B. Copolymerisate bestehend aus Acrylaten oder Methacrylaten oder aus einer Mischung von Acrylaten und Methacrylaten hergestellt werden. Des weiteren sind sowohl Zweiblock- als auch Mehrblockcopolymerisate bestehend aus Acrylaten und/oder Methacrylaten zugänglich, z.B. n-Butylacrylat/2-Ethylhexylacrylat- oder Methylmethacrylat/2-Ethylhexylacrylat-Blockcopolymere. Unter Homo-, Co- und Blockcopolymerisaten im Sinne der vorliegenden Erfindung sind nicht nur die isolierten Polymerisate, sondern auch die mittels anionischer Polymerisation erhaltenen Reaktionsgemische, umfassend Homo-, Co- oder Blockcopolymerisate, zu verstehen.

Geeignete Acrylatmonomerbausteine sind z.B. C₁- bis C₂₀-Alkylacrylate. Bevorzugt werden C₁- bis C₁₀-, besonders bevorzugt C₁- bis C₈-Alkylacrylate eingesetzt. Die Alkylreste können sowohl linear als auch verzweigt sein oder einen Ring bilden oder Ethergruppen oder Aminogruppen enthalten sowie partiell oder vollständig mit Halogenatomen substutiuert sein. Beispielsweise können 2-Ethylhexylacrylat, 2-Ethylpentylacrylat, 2-Ethylbutylacrylat, 2-Methylhexylacrylat, 2-Methylpentylacrylat, 2-Methylbutylacrylat, 2-Methylpropylacrylat, 3-Ethylhexylacrylat, 3-Ethylpentylacrylat, 3-Methylhexylacrylat, 3-Methylpentylacrylat, 3-Methylbutylacrylat, Methylacrylat, Ethylacrylat, n-Propylacrylat, i-Propylacrylat, n-Butylacrylat, i-Butylacrylat, t-Butylacrylat, n-Pentylacrylat, i-Pentylacrylat, n-Hexylacrylat, n-Decylacrylat, 4-t-Butylcyclohexylacrylat, Stearylacrylat, Laurylacrylat, Ethyldiglykolacrylat, 2-Ethoxyethylacrylat, 2-Methoxyethylacrylat oder Dimethylaminoethylacrylat eingesetzt werden. Des weiteren kommen Acrylate mit einer olefinisch ungesättigten Estereinheit in Frage, wie Dihydrodicyclopentadienylacrylat, Allylacrylat, 3- oder 4-Vinylbenzylacrylat, 2-Allyloxyethylacrylat oder solche mit aromatischen Gruppen, wie Phenylacrylat oder 2-Phenoxyethylacrylat oder vinylaromatischen Gruppen. Bevorzugt sind Methylacrylat, n-Butylacrylat, 2-Ethylhexylacrylat, Dihydrodicyclopentadienylacrylat und Allylacrylat, insbesondere 2-Ethylhexylacrylat.

Unter geeignete Methacrylatmonomerbausteine fallen u.a. Alkylmethacrylate mit 1 bis 20 C-Atomen, bevorzugt 1 bis 10, insbesondere 1 bis 8 C-Atomen in der Estergruppe. Die Alkylreste können sowohl linear als auch verzweigt sein oder einen Ring bilden sowie partiell oder vollständig mit Halogenatomen substituiert sein oder Ether- oder Aminogruppen enthalten. Z.B. finden 2-Ethylhexylmethacrylat, 2-Ethylpentylmethacrylat, 2-Ethylbutylmethacrylat, 2-Methylhexylmethacrylat, 2-Methylpentylmethacrylat, 2-Methylbutylmethacrylat, 2-Methylpropylmethacrylat, 2-Ethylhexylmethacrylat, 3-Ethylpentylmethacrylat, 3-Methylhexylmethacrylat, 3-Methylpentylmethacrylat, 3-Methylbutylmethacrylat, Methylmethacrylat, Ethylmethacrylat, 2,2,2-Trifluorethylmethacrylat, n-Propylmethacrylat, i-Propylmethacrylat, n-Butylmethacrylat, i-Butylmethacrylat, t-Butylmethacrylat, n-Pentylmethacrylat, i-Pentylmethacrylat, n-Hexylmethacrylat, Cyclohexylmethacrylat, n-Octylmethacrylat, n-Decylmethacrylat oder Glycidylmethacrylat Verwendung. Ebenso können Methacrylate mit einer olefinisch ungesättigten Estereinheit eingesetzt werden, wie Dihydrodicyclopentadienylmethacrylat, Allylmethacrylat, 3- oder 4-Vinylbenzylmethacrylat, 2-Allyloxymethacrylat oder solche mit aromatischen Esterresten, wie Phenyl oder 2-Phenoxyethyl oder mit vinylaromatischen Esterresten. Bevorzugt sind Methylmethacrylat, 2-Ethylhexylmethacrylat und Allylmethacrylat.

Die genannten Acrylate und Methacrylate können jeweils für sich für die Darstellung von Homopolymerisaten sowie in einer beliebigen Zusammenstellung für die Herstellung von Copolymerisaten und Blockcopolymerisaten verwendet werden.

Für die Herstellung von Copolymerisaten und Blockcopolymerisaten enthaltend Acrylate und/oder Methacrylate kommen daneben als weitere Monomerbausteine auch Acrylnitril, Methacrylnitril, Acrylamide und Methacrylamide in Betracht.

Unter den statistischen Copolymerisaten sind solche bevorzugt, die aus 2-Ethylhexylacrylat und Methylmethacrylat, n-Butylacrylat, t-Butylacrylat, Dihydrodicyclopentadienylacrylat, 3- oder 4-Vinylbenzylacrylat, 2-Allyloxyethylacrylat oder Allylacrylat, insbesondere aus 2-Ethylhexylacrylat und n-Butylacrylat aufgebaut sind.

Unter den Blockcopolymerisaten sind solche bevorzugt, die aus 2-Ethylhexylacrylat und Methylmethacrylat, n-Butylacrylat, t-Butylacrylat, Dihydrodicyclopentadienylacrylat, 3- oder 4-Vinylbenzylmethacrylat, 2-Allyloxymethacrylat oder Allylacrylat, insbesondere aus 2-Ethylhexylacrylat und Methylmethacrylat aufgebaut sind.

Das erfindungsgemäße Verfahren kann mit für die anionische Polymerisation bekannten Initiatorsystemen durchgeführt werden, wie sie auch in J.M.S.-Rev. Macromol. Chem. Phys., 1994, C34, S. 243-324, beschrieben sind.

Als geeignet hat sich u.a. ein Initiatorsystem bestehend aus einer metallorganischen, bevorzugt alkaliorganischen Verbindung oder einer Mischung unterschiedlicher metallorganischer Verbindungen als Starter und einem Metallalkoholat, insbesondere einem Alkalialkoholat, als chelatisierend wirkendes Additiv erwiesen. Eine derartige Initiatorzusammensetzung findet sich in der EP-A 0 524 054 mit bevorzugter Nennung von Diphenylmethyllithium als Starter und dem Lithiumsalz von CH₃(OCH₂CH₂)₂OH als Additiv, und ebenfalls in der EP 0 668 297, in der neben dem bereits genannten Initiatorsystem bimetallische Alkoxyalkoxide hervorgehoben werden.

Als chelatisierende Additive kommen beispielsweise in Betracht CH₃(OCH₂CH₂)OLi, CH₃(OCH₂CH₂)₂OLi, CH₃(OCH₂CH₂)₃OLi, n-Bu(OCH₂CH₂)₂OLi, Et(OCH₂CH₂)₂OLi oder Mischungen der genannten Additive. Des weiteren eignen sich als ungeladene, chelatisierend wirkende Additive makrocyclische Polyether und Kryptanden, z.B. Benzo-15-Krone-5, Benzo-18-Krone-6, 1,4,7,10-Tetraoxacyclododecan, 1,4,7,10,13-Pentaoxacyclooctadecan, 2,3,11,12-Dibenzo-1,4,7,10,13,16-Hexaoxacyclooctadecan-2,11-dien, 1,10-Diaza-4,7,13,16,21,24-hexaoxabicyclo[8.8.8]hexacosan oder 5,6-Benzo-4,7,13,16,21,24-hexaoxa-1,10-diazabicyclo[8.8.8]hexacosan.

Ein weiteres, ebenfalls bevorzugtes anionisches Initiatorsystem für das erfindungsgemäße Verfahren geht zurück auf
(a) Metallalkoholate der allgemeinen Formeln (i) oder (ii) als chelatisierende Additive

   R¹R²N-R³-OM (i),

   R⁴N(R⁵-OZ¹)(R⁶-OZ²) (ii),

   worin
   R¹ und R², jeweils unabhängig voneinander, sowie R⁴ als Alkylgruppe Methyl, Ethyl, i- oder n-Propyl oder i-, n- oder t-Butyl; als Cycloalkylgruppe Cyclopropyl, -pentyl oder -hexyl; als Alkylarylgruppe Benzyl; als aromatische Gruppe Phenyl, als heteroaromatische Gruppe Pyridyl bedeuten können,
   R³ z.B. eine Methylen-, Ethylen-, n-, i-Propylen-, Ethoxyethyl- oder Phenyleneinheit bedeutet,
   R⁵ und R⁶, unabhängig voneinander, als Arylgruppe Phenyl; als Alkylarylgruppe Benzyl; als Alkylgruppe Methyl, Ethyl, i- oder n-Propyl oder i-, n- oder t-Butyl darstellen können und
   M, Z¹ und Z², unabhängig voneinander, Metallkationen, ausgewählt aus der Gruppe der Alkalimetalle bedeuten, insbesondere Lithium, sowie
(b) auf Alkali- oder Erdalkalimetallalkyle als Starter.

Beispiele für unter die allgemeinen Formeln (i) und (ii) fallende Alkalimetallalkoholate sind die Lithiumsalze von 2-Dimethylaminoethanol, 2-Diethylaminoethanol, 2-Diisopropylaminoethanol, 1-(Dimethylamino) -2-propanol, 2-Dibutylaminoethanol, 2,2'-(n-Butylimino)bisethanol, 1,1'-(Methylimino)bis-2-propanol, 2-[2-(Dimethylamino)ethoxy]ethanol, 2-Diphenylaminoethanol, 2-(Ethylphenylamino)ethanol, 2-[Ethyl-(3-methylphenyl)amino]ethanol, 3-(Ethylamino)-4-methylphenol, 3-Diethylaminophenol, 2,2'-(Phenylimino)bisethanol und 2,2'-((3-Methylphenyl)imino]bisethanol. Bevorzugt wird auf die Lithiumsalze von 2-Dimethylaminoethanol, 2-Diethylaminoethanol, 2-Diisopropylaminoethanol, 2-Diethylaminoethanol, 2-Diisopropylaminoethanol, 1,1'-(Methylimino)bis-2-propanol und 2-[2-(Dimethylamino)ethoxy]ethanol zurückgegriffen.

Besonders bevorzugt sind die Lithiumsalze von 2-Dimethylaminoethanol und 1,1'-(Methylimino)bis-2-propanol. Die Alkalimetallalkoholate können nach gängigen Verfahren durch Basenbehandlung aus den entsprechenden Aminoalkoholen erhalten werden. So wird beispielsweise 2-Dimethylaminolithiumethoxid durch Deprotonierung von 2-Dimethylaminoethanol bei 0°C mittels s-Butyllithium dargestellt.

Als anionische Metallalkylstarterverbindungen können für das erfindungsgemäße Verfahren im allgemeinen Alkyl- oder Alkylarylalkaliverbindungen verwendet werden, wobei der Alkylrest bevorzugt 1 bis 10, besonders bevorzugt 1 bis 6 C-Atome aufweist. Die Alkylarylverbindungen verfügen bevorzugt über eine C₁- bis C₁₀-Alkylgruppe und eine C₆- bis C₁₄-Arylgruppe, besonders bevorzugter Arylrest ist Phenyl oder substituiertes Phenyl. Geeignete Alkylarylverbindungen sind z.B. von Styrol, α-Methylstyrol oder 1,1-Diphenylethen abgeleitete Alkaliverbindungen, die durch Umsetzung mit beispielsweise n-Butyllithium, s-Butyllithium oder t-Butyllithium erhalten werden. Als häufig verwendete Alkylaryl- und Alkylalkaliverbindungen seien genannt: n-Butyllithium, s-Butyllithium, t-Butyllithium, Diphenylmethyllithium, -natrium, -kalium, 1-Phenylhexyllithium, 1,1-Diphenylhexyllithium.

Außerdem können als anionische Starterverbindungen Alkaliamide, Alkaliesterenolate oder Alkaliketoenolate eingesetzt werden. Unter diesen sind bevorzugt: Lithiumdiisopropylamid, Lithiumethylisobutyrat sowie das Lithiumenolat von Diisopropylketon.

Bei dem erfindungsgemäßen Verfahren auf der Basis von Initiatorsystemen mit anionischen Starterverbindungen werden bevorzugt neben Styrol als Lösungsmittel eine oder mehrere Lösungsmittelkomponenten eingesetzt.

Bevorzugt werden als weitere Komponenten inerte unpolare und polare Lösungsmittel verwendet. Hierunter fallen aromatische Kohlenwasserstoffe, wie Toluol, Benzol, Xylol oder Ethylbenzol, und aliphatische Kohlenwasserstoffe, wie Cyclohexan, Hexan, Pentan oder Tetrahydrofuran. Es können auch Mischungen unpolarer Lösungsmittelkomponenten, wie etwa Mischungen aus Toluol mit Ethylbenzol sowie Mischungen aus unpolaren und polaren Lösungsmitteln wie Mischungen aus Ethylbenzol und Tetrahydrofuran als Lösungsmittelkomponente verwendet werden.

In der Regel liegt z.B. der Styrolanteil an der Gesamtlösungsmittelmenge im Bereich von 10 bis 100 Vol.-%, bevorzugt im Bereich von 20 bis 99 Vol.-% und besonders bevorzugt im Bereich von 30 bis 95 Vol.-%, wenn die anionische Polymerisation mit Alkali- oder Erdalkalimetallalkylen gestartet wird.

Die neben der vinylaromatischen Verbindung verwendete Lösungsmittelkomponente besteht bevorzugt aus unpolaren Lösungsmitteln oder aus Lösungsmittelmischungen bestehend aus im wesentlichen unpolaren und daneben polaren Bestandteilen. Es kann z.B. als Lösungsmittelkomponente ein Gemisch aus Ethylbenzol und Tetrahydrofuran eingesetzt werden, das ein Mischungsverhältnis im Bereich von 55:45 bis 99:1, bevorzugt im Bereich von 80:20 bis 95:5 aufweist.

Die erfindungsgemäßen Verfahren in Gegenwart eines anionischen Initiators können sowohl im Batch- als auch im kontinuierlichen Verfahren eingesetzt werden. Grundsätzlich können die Komponenten der Initiatorzusammensetzung, das Lösungsmittel und die Monomeren in unterschiedlicher Reihenfolge miteinander vermischt werden. Beispielsweise können alle Starterkomponenten vorgelegt werden und Lösungsmittel und Monomerzugabe anschließend erfolgen. Des weiteren können die Komponenten des Initiatorsystems entweder in separaten Lösungen - gleichzeitig oder nacheinander, wobei die Metallorganylverbindung regelmäßig vorgelegt wird - oder als in einem inerten Lösungsmittel bzw. Lösungsmittelsystem hergestellte Mischung zur Monomerenlösung gegeben werden. Bevorzugt wird die Monomerenlösung zum Initiatorsystem gegeben. Bei dem Batch-Verfahren kann die Monomerenmenge auf einmal, stufenweise oder kontinuierlich zugegeben werden.

Insbesondere bei der kontinuierlichen Verfahrensweise hat es sich als vorteilhaft erwiesen, Initiatorsystem- und Monomerlösung gleichzeitig oder nahezu gleichzeitig gegebenenfalls unter turbulenten Mischungsverhältnissen in das Reaktionsgefäß einzuführen. Dazu werden die Monomerlösung sowie die Initiatorlösung in einer Mischdüse mit geringem Volumen unter turbulenten Strömungsverhältnissen gemischt und anschließend durch ein Rohr mit engem Querschnitt, das mit statischen Mischern ausgerüstet sein kann (z.B. SMX-Mischer der Firma Sulzer), geleitet. Die Strömungsgeschwindigkeit sollte so hoch sein, daß eine relativ einheitliche Verweilzeit beobachtet wird. Die Zugabe eines Zweitmonomeren kann in einer weiteren, nachgeschalteten Mischdüse erfolgen.

Die Umsetzung kann beispielsweise bei einer Temperatur im Bereich von -78°C bis +100°C durchgeführt werden. Bevorzugt ist ein Temperaturbereich von -55°C bis +80°C. Die Reaktionstemperatur kann entweder konstant gehalten werden oder in kontrollierter Weise erhöht werden. Zur Erreichung hoher Molekulargewichte Mₙ und enger Molekulargewichtsverteilungen ist es nicht abträglich, wenn sich das Reaktionsgemisch infolge der freiwerdenden Reaktionsenthalpie innerhalb kurzer Zeit erwärmt.

Nach erfolgtem Molekulargewichtsaufbau wird die Polymerisationsreaktion durch Zugabe einer protischen Substanz wie einem Alkohol (z.B. Methanol, Ethanol oder i-Propanol), einer Säure (z.B. Essigsäure, Ameisensäure oder Salzsäure), Wasser oder einer Mischung dieser Verbindungen abgebrochen.

Das Reaktionsgemisch kann in an sich bekannter Weise aufgearbeitet werden. Die erhaltenen Polymerisate können beispielsweise durch Zugabe einer geeigneten Menge eines niederen Alkohols oder Wasser ausgefällt werden. Wahlweise kann auch das Lösungsmittel bzw. Lösungsmittelsystem destillativ abgetrennt werden.

Die mittels eines anionischen Initiatorsystems nach dem erfindungsgemäßen Verfahren erhältlichen Polymerisate weisen im allgemeinen Molekulargewichte Mₙ im Bereich von 5000 bis 2000000 g/mol, bevorzugt im Bereich von 5000 bis 500000 g/mol und besonders bevorzugt im Bereich von 5000 bis 250000 g/mol auf. Die Molekulargewichtsverteilung M_{w}/Mₙ liegt in der Regel im Bereich von 1,05 bis 3,5. Der Einbau von z.B. vinylaromatischen Verbindungen in die Polymerketten wird unabhängig von den Polymerisationsbedingungen oder der gewählten Menge an vinylaromatischer Verbindung nicht beobachtet.

In einer weiteren bevorzugten Ausführungsform des erfindungsgemäßen Verfahrens wird die anionische Polymerisation mit Hilfe von Metallocenkomplexen durchgeführt. Bevorzugt werden Lanthanoid-Metallocenkomplexe eingesetzt, ganz besonders bevorzugt sind Metallocenkomplexe des Samariums, Ytterbiums oder Europiums, insbesondere des Samariums, in denen das Metall formal zweifach oder dreifach positiv geladen vorliegt.

Die Metallocenkomplexe können einen oder zwei Metallocenliganden aufweisen. Als Metallocenliganden sind beispielsweise C₅- bis C₅₀-Cyclopentadienylstruktureinheiten bevorzugt. Hierunter fällt der Cyclopentadienylrest C₅H₅ sowie alle einkernigen und mehrkernigen substituierten und unsubstituierten Molekülstrukturen mit insgesamt 5 bis 50 Kohlenstoffatomen, in welcher die Cyclopentadienylstruktureinheit formal enthalten ist. Es seien beispielhaft genannt ein- bis fünffach mit C₁- bis C₂₀-kohlenstofforganischen oder C₁- bis C₃₀-siliciumorganischen Resten substituierte Cyclopentadienylderivate. Diese Reste können sein C₁- bis C₁₀-Alkyl, C₅- bis C₇-Cycloalkyl, C₆-bis C₁₅-Aryl oder Aralkyl, wobei gegebenenfalls auch zwei benachbarte Reste gemeinsam für 4 bis 15 C-Atome aufweisende gesättigte oder ungesättigte cyclische Gruppen stehen können, oder SiR₃ mit R in der Bedeutung von C₁- bis C₁₀-Alkyl, C₃- bis C₁₀-Cycloalkyl oder C₆- bis C₁₅-Aryl. Hierzu zählen zum Beispiel Cyclopentadienyl, Pentamethylcyclopentadienyl, Methylcyclopentadienyl, Ethylcyclopentadienyl, 4-Butylcyclopentadienyl, Trimethylsilylcyclopentadienyl und (Ethyl)(tetramethyl)cyclopentadienyl.

Als mehrkernige Derivate mit einer Cyclopentadienylstruktureinheit seien Indenyl, Fluorenyl und Benzindenyl genannt. Grundsätzlich sind solche Cyclopentadienylstruktureinheiten bevorzugt, die einen sterisch anspruchsvollen Metallocenliganden bilden. Besonders bevorzugt ist Pentamethylcyclopentydienyl.

Für das erfindungsgemäße Verfahren werden z.B. Lanthanid(II)-Metallocene mit zwei Metallocenliganden, besonders bevorzugt solche mit zwei Cyclopentadienyleinheiten komplexierte Lanthanoid(II)-Metallocene, eingesetzt.

Die zwei freien Koordinationsstellen am Lanthanoid(II)-Metallocen mit zweifachem Cyclopentadienylkomplexliganden werden z.B. durch schwach koordinierende Lewis-Basen wie Tetrahydrofuran, Diethylether. Dimethoxyethan oder Acetonitril abgesättigt. Bevorzugt wird Tetrahydrofuran verwendet. Als geeignetes Lanthanoidmetall hat sich Samarium erwiesen, das in den bevorzugten Komplexen in der Regel formal zweifach oder dreifach positiv geladen vorliegt. Besonders bevorzugt als Metallocen-Initiator für die anionische Polymerisation von insbesondere Acrylaten und Methacrylaten ist beispielsweise Bis(pentamethylcyclopentadienyl)-samarium(II)-bis(tetrahydrofuran) [(C₅Me₅)₂Sm(THF)₂], dessen Herstellung und Charakterisierung z.B. zu finden ist in W.J. Evans, I. Bloom, W.E. Hunter, J.L. Atwood, J. Am. Chem. Soc. 1981, 193, S. 6507-6508.

Als formal dreifach positiv geladene Metallocenkomplexe eignen sich auch solche der allgemeinen Formel (II) 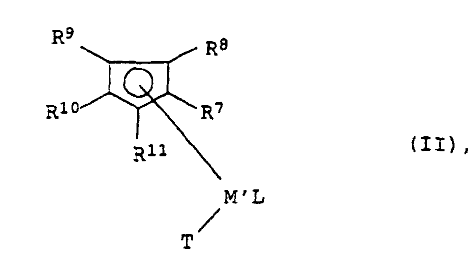 in der die Substituenten folgende Bedeutung haben:
- M': Lanthan, Cer, Samarium, Europium, Ytterbium,
- L: Fluor, Chlor, Brom, Iod, Wasserstoff, C₁- bis C₁₀-Alkyl, C₆- bis C₁₅-Aryl, Alkylaryl mit 1 bis 10 C-Atomen im Alkylrest und 6 bis 20 C-Atomen im Arylrest, -OR¹² oder -NR¹²R¹³,
wobei
- R¹² und R¹³: C₁- bis C₁₀-Alkyl, C₆- bis C₁₅-Aryl, Alkylaryl, Arylalkyl, Fluoralkyl oder Fluoraryl mit jeweils 1 bis 10 C-Atomen im Alkylrest und 6 bis 20 C-Atomen im Arylrest bedeuten,
- R⁷ bis R¹¹: Wasserstoff, C₁- bis C₁₀-Alkyl, 5- bis 7-gliedriges Cycloalkyl, das seinerseits ein C₁- bis C₁₀-Alkyl als Substituent tragen kann, C₆- bis C₁₅-Aryl oder Arylalkyl, wobei gegebenenfalls auch zwei benachbarte Reste gemeinsam für 4 bis 15 C-Atome aufweisende gesättigte oder ungesättigte cyclische Gruppen stehen können oder Si(R¹⁴)₃ mit
- R¹⁴: C₁- bis C₁₀-Alkyl, C₃- bis C₁₀-Cycloalkyl oder C₆- bis C₁₅-Aryl.
- T: für L oder 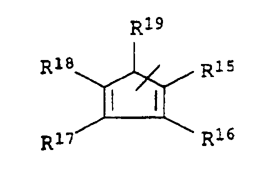 steht,
wobei die Reste
- R¹⁵ bis R¹⁹: Wasserstoff, C₁- bis C₁₀-Alkyl, 5- bis 7-gliedriges Cycloalkyl, das seinerseits ein C₁- bis C₁₀-Alkyl als Substituent tragen kann, C₆- bis C₁₅-Aryl oder Arylalkyl bedeuten und wobei gegebenenfalls auch zwei benachbarte Reste gemeinsam für 4 bis 15 C-Atome aufweisende gesättigte oder ungesättigte cyclische Gruppen stehen können, oder Si(R²⁰)₃ mit
- R²⁰: C₁- bis C₁₀-Alkyl, C₆- bis C₁₅-Aryl oder C₃- bis C₁₀-Cycloalkyl.

Die Synthese derartiger Komplexverbindungen kann nach an sich bekannten Methoden erfolgen. Beispiele für entsprechende Herstellungsverfahren sind u.a. im Journal of Organometallic Chemistry, 1993, 450, S. 121-124. beschrieben. Es können auch Mischungen verschiedener Metallkomplexe eingesetzt werden.

Für das erfindungsgemäße Verfahren zur anionischen Polymerisation mittels Lanthanoid-Metallocenen können grundsätzlich olefinisch ungesättigte Verbindungen als Lösungsmittel oder Lösungsmittelkomponente eingesetzt werden, die nicht ein Acrylat- oder Methacrylatderivat sind. Hierzu zählen zum Beispiel olefinisch ungesättigte Verbindungen, die unter die bereits beschriebene allgemeine Formel (I) fallen.

Bevorzugt werden vinylaromatische Verbindungen, insbesondere Styrol, als Lösungsmittel verwendet. Die für das erfindungsgemäße Verfahren in Frage kommenden Lösungsmittel können als solche oder im Gemisch mit weiteren inerten Lösungsmitteln eingesetzt werden. Es hat sich jedoch als vorteilhaft erwiesen, vornehmlich aus Gründen der Löslichkeit des Metallocen-Initiators, zumindest geringe Mengen einer weiteren Lösungsmittelkomponente zu verwenden. Grundsätzlich kommen hierfür die bereits vorhergehend beschriebenen Lösungsmittel und Lösungsmittelsysteme in Frage. Als geeignet hat sich zum Beispiel Tetrahydrofuran erwiesen. Der Anteil dieser Komponente an der Gesamtlösungsmittelmenge liegt bevorzugt im Bereich von 0,1 bis 95, besonders bevorzugt im Bereich von 0,5 bis 50 und insbesondere im Bereich von 0,5 bis 20 Vol.-%.

Grundsätzlich können der Metallocen-Initiator, das Lösungsmittel bzw. die Lösungsmittelkomponenten und die Monomeren in unterschiedlichster Reihenfolge miteinander gemischt werden. Beispielsweise kann der Metallocen-Initiator vorgelegt werden, gegebenenfalls gelöst in einem geeigneten Lösungsmittel, z.B. Tetrahydrofuran, und die Lösungsmittel- und Monomerzugabe anschließend erfolgen.

Bevorzugt werden zunächst das oder die Monomerbausteine sowie das Lösungsmittel oder Lösungsmittelsystem vorgelegt und sodann mit einer Metallocen-Initiatorlösung versetzt.

Die Umsetzung kann beispielsweise bei einer Temperatur im Bereich von -30 bis +80°C durchgeführt werden. Bevorzugt wird ein Temperaturbereich von -20 bis +50°C verwendet. Die Reaktionstemperatur kann konstant gehalten oder in kontrollierter Weise gesteigert werden. Zur Erreichung hoher Molekulargewichte Mₙ und enger Molekulargewichtsverteilungen ist es nicht abträglich, wenn sich das Reaktionsgemisch infolge der freiwerdenden Reaktionsenthalpie innerhalb kurzer Zeit erwärmt.

Es hat sich als vorteilhaft herausgestellt, die verwendeten Monomeren sowie das Lösungsmittel vor der Reaktion zur Entfernung von Resten von Wasser oder von Resten der Alkohol- und Carbonsäurekomponenten der eingesetzten Methacrylsäure- und/oder Acrylsäureester mit geeigneten Trocknungsmitteln zu behandeln. Beispielsweise können zu diesem Zweck Aluminiumoxid-Perlen eingesetzt werden. Des weiteren hat es sich als vorteilhaft herausgestellt, insbesondere zur Erzielung reproduzierbar hoher Molekulargewichte Mₙ, dem Reaktionsgemisch Aluminiumorganylverbindungen oder Bororganylverbindungen, wie sie etwa in der US-A 4,889,900 oder der US-A 5 002,676 beschrieben sind, zuzugeben. Bevorzugt werden zu diesem Zweck Lösungen von Aluminiumorganylen in inerten Lösungsmitteln wie Toluol oder Hexan verwendet. Geeignete Aluminiumorganyle sind zum Beispiel Trialkyl- und Triarylaluminiumverbindungen sowie Aluminiumorganyle mit Alkyl- und Arylresten oder Hydridresten, z.B. Diisobutylaluminiumhydrid. Ebenso kommen Mischungen dieser Verbindungen in Frage. Bevorzugt werden Trialkylaluminiumverbindungen, insbesondere Triethylaluminium und Triisobutylaluminium eingesetzt. Grundsätzlich sind jedoch leicht hydrolisierbare Verbindungen geeignet, die mit den Monomerbausteinen und Lösungsmitteln keine Reaktion eingehen. Diese werden zu den Monomer- und Lösungsmittelkomponenten gegeben, bevor die Zugabe des Metallocen-Initiators erfolgt.

Nach erfolgtem Molekulargewichtsaufbau kann die Polymerisationsreaktion durch Zugabe einer protischen Substanz, wie vorgehend für anionische Initiatorsysteme beschrieben, abgebrochen werden. Als geeignet haben sich insbesondere Mischungen aus Methanol und Essigsäure, z.B. in einem Verhältnis im Bereich von 100:1 bis 1:100, bevorzugt von 10:1 bis 1:10 erwiesen.

Die Aufarbeitung der mittels Metallocen-Initiator erhaltenen Polymerisate erfolgt in der Regel wie für die durch Metallorganyle initiierte anionische Polymerisation beschrieben.

Die nach dem erfindungsgemäßen Verfahren erhaltenen Reaktionsgemische können nach Abbruch der Polymerisationsreaktion durch Zugabe einer protischen Substanz, aber auch ohne diskreten Abbruchschritt, unmittelbar einer radikalisch initiierten Polymerisation unterworfen werden.

Das erfindungsgemäße Verfahren zeichnet sich zum einen dadurch aus, daß vollständige oder nahezu vollständige Umsätze erreicht werden. Zum anderen wird die vor allem bei der anionischen Polymerisation in Etherlösungsmitteln regelmäßig auftretende Gelbildung vollständig unterdrückt. Außerdem können auf kontrollierte Weise Homo-, Co- und Blockcopolymerisate von Acrylaten und/oder Methacrylaten dargestellt werden. Darüber hinaus sind durch die nachgeschaltete radikalische Polymerisation des Reaktionsgemisches zum Beispiel acrylathaltige und methacrylathaltige Styrolpolymerisate und Styrolcopolymerisate auf einfache Art und Weise unter Einsparung der herkömmlichen Lösungsmittel zugänglich.

Die mit dem erfindungsgemäßen Verfahren erhältlichen Blockcopolymerisate können als Blendkomponente für die Herstellung thermoplastischer Formmassen verwendet werden. Bevorzugt werden Zwei- oder Multiblockcopolymerisate eingesetzt, in denen mindestens ein Block eine Glasübergangstemperatur (T_{g}) kleiner als 0°C, bevorzugt kleiner als -20°C, besonders bevorzugt kleiner als - 45°C, und mindestens ein Block eine Glasübergangstemperatur größer als 30°C, bevorzugt größer als 70°C, besonders bevorzugt größer als 100°C aufweist.

Hierunter fallen z.B. als Zweiblockcopolymere Poly[methylmethacrylat-b-n-Butylacrylat] und Poly[methylmethacrylat-b-2-Ethylhexylacrylat]. Als geeignete Dreiblockcopolymere kommen z.B. Poly[methylmethacrylat-b-2-Ethylhexylacrylat-b-Methylmethacrylat], Poly[methylmethacrylat-b-n-Butylacrylat-b-Methylmethacrylat] oder Poly[2-Ethylhexylacrylat-b-Methylmethacrylat-b-2-Ethylhexylacrylat].

Des weiteren können die einzelnen Blöcke auch aus Copolymeren mit statistischer Zusammensetzung aufgebaut sein. Als Beispiel sei genannt: Poly[methylmethacrylat-b-(Methylmethacrylat-co-2-Ethylhexylacrylat)-b-Methylmethacrylat].

Der Anteil des Blocks bzw. der Blöcke mit einem T_{g}-Wert kleiner als 0°C an dem gesamten Blockcopolymerisat liegt im allgemeinen im Bereich von 1 bis 99 Gew.-%, bevorzugt im Bereich von 10 bis 90 Gew.-%, besonders bevorzugt ein Bereich von 20 bis 80 Gew.-%.

Zur Verbesserung der mechanischen Eigenschaften, z.B. der Schlagzähigkeit, insbesondere bei tiefer Temperatur, von thermoplastischen Formmassen können diese Blockcopolymerisate bei deren Herstellung als Blendkomponente eingesetzt werden. Derartige Blends lassen sich z.B. herstellen mit Polycarbonaten, Polycarbonat-ASA-Formmassen, z.B. Terblend® S (BASF AG), Polyestern, insbesondere Polyethylenterephthalat und Polybutylenterephthalat (Ultradur®, BASF AG), Polyester-ASA-Formmassen, insbesondere Polybutylenterephthalat-ASA-Formmassen (Ultrablend® S, BASF AG), Polyamiden (z.B. Ultramid®, BASF AG), Polyphenylenethern, Polyphenylenether- (Styrol/Butadien-Copolymerisat)-Blend (z.B. Luranyl®, BASF AG), Polyethersulfonen (Ultrason® E, BASF AG), Polysulfonen (Ultrason® S, BASF AG), Polyoxymethylenen (z.B. Ultraform®, BASF AG), Polyvinylchloriden, Polyvinylchlorid/Acrylat-Pfropfcopolymeren (z.B. Vinidur®, BASF AG), Polystyrolen oder schlagzähmodifizierten Polystyrolen, wie beschrieben in DE-A 29 46 761 und DE-A 17 70 392, ABS-Formmassen (Acrylnitril/Butadien/Styrol-Polymerisate, z.B. Terluran®, BASF AG), Styrol-Acrylnitril-Copolymeren (z.B. Luran®, BASF AG), Acrylnitril/Styrol/Acrylester-Polymeren (z.B. Luran® S, BASF AG) oder Polymethylmethacrylat-Formmassen (z.B. Lucryl®, BASF AG) oder Schlagzähmodifizierten Polymethylmethacrylat-Formmassen, die z.B., wie in der EP-A 0 062 223 beschrieben, aus einem harten Methylmethacrylatpolymerisat, einem harten Styrol/Acrylnitrilpolymerisat und einem weichen Pfropfcopolymerisat von Alkyl(meth)acrylat und gegebenenfalls Styrol auf einem Kautschuk bestehen. Als schlagzähmodifizierte Polyalkylmethacrylat-Formmassen kommen auch solche gemäß WO 97/08241 in Frage, die sich z.B. aus einem harten Methylmethacrylatpolymerisat, einem harten Styrol/Acrylnitrilpolymerisat und einem weichen Pfropfcopolymerisat, bestehend aus einer ersten Pfropfhülle aus Vinylaromat und Alkylmethacrylat sowie einer zweiten Pfropfhülle aus im wesentlichen (Meth)acrylaten auf einem Kautschuk, zusammensetzen.

Der Anteil der beschriebenen Blockcopolymerisate an der thermoplastischen Formmasse liegt üblicherweise im Bereich von 1 bis 90 Gew.-%, bevorzugt im Bereich von 2 bis 80 Gew.-%.

Das Einmischen der Blockcopolymerisate in die aufgeführten Formmassen gelingt in der Regel nach an sich bekannten Verfahren, wie z.B. durch Mischen in trockener, kalter Form, gefolgt von gemeinsamem Aufschmelzen und Durchmischen im Extruder.

Aus den erhaltenen thermoplastischen Formmassen lassen sich auf herkömmliche Art und Weise Folien, Fasern und Formkörper herstellen.

### Beispiele:

Die Beispiele wurden unter Ausschluß von Sauerstoff und Feuchtigkeit in der üblichen Schutzgastechnik durchgeführt.

Die zahlen- und gewichtsmittleren Molekulargewichte Mₙ und M_{w} wurden mittels Gelpermationschromatographie (GPC) in Tetrahydrofuran bei 35°C relativ zu einem eng verteilten Polymethylmethacrylatstandard bestimmt. Die Detektion erfolgte mit einem Brechungsindex (RI) Detektor Waters 410.

Der Gehalt an Restmonomer in der Reaktionsmischung wurde mittels Gaschromatographie (GC) an einem HP 5890 Gaschromatograph bestimmt. Dabei wurde eine Kapillarsäule, DB1 (30 µm), unter den folgenden Bedingungen verwendet: Split 1:50; Einspritzblock 250°C; Detektor (FID) 250°C; Ofentemperatur 5 min bei 60°C, dann 15°C/min bis 250°C. Als interner Standard wurde Dioxan eingesetzt.

Die monomeren Acrylate und Methacrylate wurden mittels Stickstoffspülung, Aluminiumoxid und Calciumhydrid gereinigt und anschließend im Vakuum destilliert.

Ethylbenzol wurde über Aluminiumoxid gereinigt.

Styrol wurde durch Einleiten von Stickstoff und Lagern über Aluminiumoxid-Perlen gereinigt.

### A. Polymerisationen in Gegenwart eines Initiatorsystems auf Metallorganylbasis

### Polymerisation im Rohrreaktor

Zur Förderung von Initiator-, Additiv- und Monomerlösung wurde eine pulsationsarme, präparative HPLC-Pumpe vom Typ Dynamax SD1 der Fa. Rainin verwendet. Als Reaktionsraum diente ein auf -20°C gekühltes, 10 m langes Metallrohr mit einem Innendurchmesser von 1,17 mm.

### Beispiel 1

### Herstellung von Poly-2-ethylhexylacrylat

Zu 1,9 g CH₃(OCH₂CH₂)₂OH (Diethylenglykolmonomethylether) und einigen Tropfen 1,1-Diphenylethylen wurde bei 0°C 1,3 M s-Butyllithium-Lösung in Cyclohexan gegeben, bis eine dauerhafte Rotfärbung auftrat. Im Vakuum wurde Cyclohexan entfernt. Anschließend wurden 250 ml Tetrahydrofuran (THF) mit 0,12 ml einer 1,3 M s-Butyllithium-Lösung (in Cyclohexan) auf rot titriert und weitere 2,7 ml einer 1,3 M s-Butyllithium-Lösung zugesetzt. Man erhielt eine dunkelrote Initiatorlösung.

Die Monomerlösung aus 100 ml 2-Ethylhexylacrylat (EHA) und 300 ml Styrol (Fluß von 17 ml/min) und die Initiatorlösung (Fluß von 50 ml/min) wurden über HPLC-Pumpen bei -50°C einer Mischdüse zugeführt und durch ein 15 m langes Rohr mit 1,17 mm Innendurchmesser (mittlere Verweilzeit ca. 14 sec) geleitet. Die Polymerisation wurde durch Zudosierung einer Methanol/Essigsäuremischung (3/2, Fluß 2 ml/min) abgebrochen. Gemäß GC-Analyse betrug der Umsatz 94 %; Mₙ = 35500 g/mol mit M_{w}/Mₙ = 2,8.

### Beispiel 2

### Herstellung von Poly(2-ethylhexylacrylat-co-dihydrodicyclopentadienylacrylat] mit einem Anteil von 10 Gew.-% an Dihydrodicyclopentadienylacrylat im Rohrreaktor.

Eine 0,0145 molare Lithiumdiisopropylamidlösung in Ethylbenzol (50 ml/min) und eine 0,144 molare Lösung von 2-Methoxylithiumethoxid in Ethylbenzol (25 ml/min) wurden über eine erste Mischdüse miteinander vermengt, auf -20°C gekühlt und, über eine 2. Mischdüse, mit einer auf -20°C gekühlten Monomerlösung in Styrol, enthaltend 0,87 mol/l EHA und 0,10 mol/l Dihydrodicyclopentadienylacrylat (DCPA) (75 ml/min), versetzt. Die mittlere Verweilzeit im Rohrreaktor betrug 4,3 sec. Am Rohrende wurde über eine weitere Düse eine 1:1-Mischung aus Methanol und Essigsäure (2 ml/min) als Abbruchreagenz eingemischt. Gemäß GC-Analyse betrug der Umsatz an EHA 95 Gew.-% und an DCPA 96 Gew.-%. Mittels DSC-Analyse (Aufheizrate: 20°C/min) wurde für das erhaltene Copolymer eine Glastemperatur T_{g} von -55°C ermittelt.

### B. Polymerisation in Gegenwart eines Initiatorsystems auf Metallocenbasis

### Beispiel 3

### Polymerisation von 2-Ethylhexylacrylat

25 ml EHA und 2 ml einer 1 M Al(i-Bu)₃-Lösung (in Toluol) wurden zu 100 ml Styrol gegeben. Die Mischung wurde auf -20°C abgekühlt und zügig unter starkem Rühren mit einer Lösung von 202 mg (C₅Me₅)₂Sm(THF)₂ in 5 ml THF versetzt, worauf die Temperatur auf 24°C anstieg. Nach 10 min wurde die Polymerisation durch Zugabe einer Methanol/Essigsäure-Mischung (1 ml; 10/1) abgebrochen. Der Umsatz an EHA betrug 99 %; M_{n.}= 130000 g/mol; M_{w}/Mₙ = 1,47.

### Beispiel 4

### Polymerisation von 2-Ethylhexylacrylat

25 ml EHA und 1 ml einer 1,9 M AlEt₃-Lösung (in Toluol) wurden zu 100 ml Styrol gegeben. Die Mischung wurde auf -20°C abgekühlt und zügig unter starkem Rühren mit einer Lösung von 202 mg (C₅Me₅)₂Sm(THF)₂ in 5 ml THF versetzt. Die Temperatur stieg auf 17°C. Nach 5 min wurde die Polymerisation durch Zugabe einer Methanol/Essigsäure-Mischung (1 ml; 10/1) abgebrochen. Der Umsatz an EHA betrug 93 %; Mₙ = 122000 g/mol; M_{w}/Mₙ = 2,80.

### Beispiel 5

### Polymerisation von 2-Ethylhexylacrylat

Zu 113 ml 2-Ethylhexylacrylat (EHA) gab man bei Raumtemperatur tropfenweise 2,25 ml Al-(iBu)₃ (1 M in Toluol) und überführte die erhaltene Mischung in 300 ml Styrol. Bei -20°C wurde zügig unter starkem Rühren eine Lösung von 608 mg (C₅Me₅)₂Sm(THF)₂ in 15 ml THF zugegeben. Es wurde ein Temperaturanstieg auf + 39°C beobachtet. Nach 1 h wurde die Polymerisation durch die Zugabe von 1 ml einer Methanol/Essigsäure-Mischung (10/1) abgebrochen.

### Beispiel 6

### Copolymerisation von 2-Ethylhexylacrylat mit Allylmethacrylat (AMA)

119 ml EHA, 5,9 ml AMA und 10 ml einer 1 M Al(i-Bu)₃-Lösung (in Toluol) wurden zu 500 ml Styrol in einem 2 l Mehrhalskolben mit Rührwerk gegeben. Die Mischung wurde auf -20°C abgekühlt und zügig unter starkem Rühren mit einer Lösung von 1 g (C₅Me₅)₂Sm(THF)₂ in 20 ml THF versetzt. Die Temperatur stieg auf 21°C. Nach 20 min wurde die Polymerisation durch Zugabe von 5 ml einer Methanol/Essigsäure-Mischung (10/1) abgebrochen. Der Umsatz an EHA betrug 99,9 %; Mₙ = 105000 g/mol; M_{w}/Mₙ = 1,60.

### Beispiel 7

### Herstellung von Poly[2-ethylhexylacrylat-co-dihydrodicyclopentadienylacrylat] mit einem Anteil von 10 Gew.-% an Dihydrodicyclopentadienylacrylat

Zu 101,5 ml EHA und 9,3 ml Dihydrodicyclopentadienylacrylat (DCPA) in 300 ml Styrol gab man bei Raumtemperatur tropfenweise 2,25 ml Al-(iBu)₃ (1 M in Toluol). Bei -20°C wurde zügig unter starkem Rühren eine Lösung von 595 mg (C₅Me₅)₂Sm(THF)₂ in 15 ml THF zugegeben. Es wurde ein Temperaturanstieg auf + 35°C beobachtet. Nach 1 h wurde die Polymerisation durch Zugabe von 1,2 ml einer Methanol/Essigsäure-Mischung (1:1) sowie 3,6 mg 4-tert.-Butylbrenzkatechin abgebrochen.

Analog Beispiel 7 wurden Copolymere mit 2-Ethylhexylacrylat als Hauptmonomerkomponente und Allylmethacrylat (Bsp. 8) bzw. 2-Allyloxyethylacrylat (6,6 statt 10 Gew.-%) (Bsp. 9) als Zweitkomponente hergestellt.

In Beispiel 10 wurde abweichend von Beispiel 7 die Menge an Dihydrodicyclopentadienylacrylat so gewählt, daß 7,5 Gew.-% in das Copolymer eingebaut wurden (s. a. Tabelle 1).

### Beispiel 11

### Herstellung von Poly(2-ethylhexylacrylat-co-dihydrodicyclopentadienylacrylat-co-laurylacrylat]

Zu 67,6 ml EHA, 9,3 ml DCPA, 34,5 ml Laurylacrylat (LA) und 300 ml Styrol gab man bei Raumtemperatur tropfenweise 2,75 ml Al-(i-Bu)₃ (1 M in Toluol). Bei -20°C wurde zügig unter starkem Rühren eine Lösung von 598 mg (C₅Me₅)₂Sm(THF)₂ in 15 ml THF zugegeben. Es wurde ein Temperaturanstieg auf +32°C beobachtet. Nach 1 h wurde die Polymerisation durch Zugabe von 1,2 ml einer Methanol/Essigsäure-Mischung (1:1) und 3,6 mg 4-tert.-Butylbrenzkatechin) abgebrochen.

### Beispiel 12

### Blockcopolymerisation von 2-Ethylhexylacrylat mit Methylmethacrylat (MMA) bei -10°C

4 ml MMA und 2 ml EHA, tropfenweise versetzt mit 0,03 ml einer 1,9 M AlEt₃-Lösung (in Toluol), wurden zu 25 ml Styrol gegeben. Die Mischung wurde auf -10°C abgekühlt und zügig unter starkem Rühren mit einer Lösung von 110 mg (C₅Me₅)₂Sm(THF)₂ in 5 ml THF versetzt. Die Temperatur stieg auf 26°C. Nach 5 min wurde die Polymerisation durch Zugabe von 1 ml einer Methanol/Essigsäure-Mischung (10/1) abgebrochen.

Zur Umsatzbestimmung wurde das Polymer in 500 ml Methanol mit 1 ml 2 N wäßriger Salzsäure gefällt, abfiltriert und 24 h im Vakuumtrockenschrank bei 50°C getrocknet. Es wurden 5,4 g eines weißen, frei fließenden Pulvers erhalten, was einer Ausbeute von 100 %, bezogen auf EHA und MMA entspricht. Mittels ¹H-NMR-Spektroskopie konnten keine Signale aromatischer Protonen detektiert werden. Mₙ = 70400 g/mol; M_{w}/Mₙ = 1,38.

### Beispiel 13

### Herstellung von Poly[methylmethacrylat-b-2-ethylhexylacrylat-b-methylmethacrylat]

Zu 45 ml Methylmethacrylat (MMA) und 45 ml EHA in 300 ml Styrol gab man bei Raumtemperatur tropfenweise 2,25 ml Al-(iBu)₃ (1 M in Toluol). Bei - 10°C wurde zügig unter starkem Rühren eine Lösung von 1200 mg (C₅Me₅)₂Sm(THF)₂ in 30 ml THF zugegeben. Es wurde ein Temperaturanstieg auf + 43,5°C beobachtet. Die Polymerisation wurde 30 Minuten nach der Samarocen-Zugabe durch Zugabe von 1,2 ml einer Methanol/Essigsäure-Mischung (1:1) und 3,6 mg 4-tert.-Butylbrenzkatechin abgebrochen.

### Beispiel 14

### Blockcopolymerisation von 2-Ethylhexylacrylat mit Methylmethacrylat bei 0°C

4 ml MMA und 2 ml EHA, tropfenweise versetzt mit 0,03 ml einer 1,9 M AlEt₃-Lösung (in Toluol), wurden zu 25 ml Styrol gegeben. Die Mischung wurde auf 0°C abgekühlt und zügig unter starkem Rühren mit einer Lösung von 111 mg (C₅Me₅)₂Sm(THF)₂ in 5 ml THF versetzt. Die Temperatur stieg auf 38°C. Nach 6 min wurde die Polymerisation durch Zugabe von 1 ml einer Methanol/Essigsäure-Mischung (10/1) abgebrochen. Mₙ = 69900 g/mol; M_{w}/Mₙ = 1,37.

### Beispiel 15 (Vergleichsbeispiel)

### Blockcopolymerisation von 2-Ethylhexylacrylat mit Methylmethacrylat bei -20°C in Tetrahydrofuran

80 ml MMA und 40 ml EHA, tropfenweise versetzt mit 0,6 ml einer 1,9 M AlEt₃-Lösung (in Toluol), wurden zu 500 ml THF in einem 2 l Mehrhalskolben mit Rührwerk gegeben. Die Mischung wurde auf -20°C abgekühlt und zügig unter starkem Rühren mit einer Lösung von 1,52 g (C₅Me₅)₂Sm(THP)₂ in 40 ml THF versetzt. Die Temperatur stieg auf +3°C. Der Ansatz war hochviskos und hatte nach 15 min eine gelartige Konsistenz, die nicht mehr gerührt werden konnte.

Durch Zugabe von 20 ml einer Methanol/Essigsäure-Mischung (10/1) wurde die Polymerisation abgebrochen. Nach Ausfällen des Polymers in 8 l Methanol mit 150 ml 2 N HCl, Waschen mit Methanol und Trocknen bei 60°C im Vakuum wurden 111 g weißes Pulver isoliert (100 % Ausbeute). Mₙ = 132800 g/mol; M_{w}/Mₙ = 1,56.

Weitere Angaben zu den in den Beispielen hergestellten Kautschuken sind der Tabelle 1 zu entnehmen.

**Tabelle 1**

| Bsp. | Comonomer ^{a)} [Gew.-%] | M_{w}^{b)} | M_{w}/Mₙ ^{b)} |
|---|---|---|---|
| 1 | - | 35500 | 2,8 |
| 2 | 10 DCPA | 218900 | 2,2 |
| 3 | - | 130000 | 1,4 |
| 4 | - | 122000 | 2,8 |
| 5 | - | 275300 | 1,5 |
| 6 | 5 AMA | 105000 | 1,6 |
| 7 | 10 DCPA | 393300 | 1,6 |
| 8 | 10 AMA | 313700 | 1,5 |
| 9 | 6,6 AOEA | 305000 | 1,4 |
| 10 | 7,5 DCPA | 361500 | 1,7 |
| 11 | 10 DCPA/30LA | 487000 | 2,4 |
| 12 | 67 MMA | 70400 | 1,3 |
| 13 | 50 MMA | 97100 | 1,3 |
| 14 | 67 MMA | 69900 | 1,3 |

| | | | |
|---|---|---|---|
| ^{a)} AMA: Allylmethacrylat, DCPA: Dihydrodicyclopentadienylacrylat, AOEA: 2-Allyloxyethylacrylat, LA: Laurylacrylat, MMA: Methylmethacrylat | | | |
| ^{b)} bestimmt mittel Gelpermeationschromatographie mit einem Polymethylmethacrylatstandard | | | |

### C. Herstellung schlagzähmodifizierter Formmassen

### Allgemeine Vorgehensweise:

Die thermoplastischen Formmassen und die Blockcopolymerisate wurden bei einer Knetertemperatur von 250°C und einer Knetdauer von 8 min extrudiert. Das gemahlene Extrudat wurde mittels Spritzguß in Probekörper überführt. Nähere Angaben zur Zusammensetzung der verwendeten Formmassen und Blockcopolymerisate sowie zu den Eigenschaften der erhaltenen Probekörper sind den Tabellen 2 und 3 zu entnehmen.

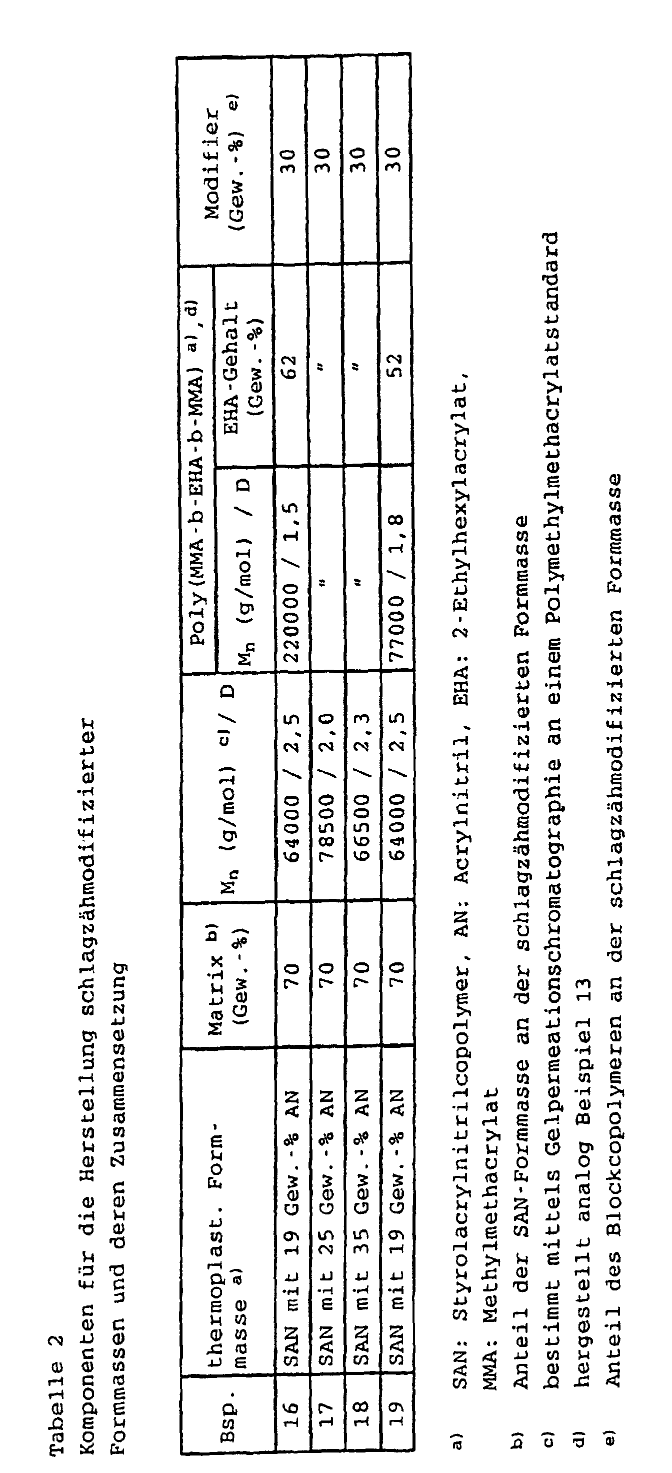

**Tabelle 3:**

| | mechanische Eigenschaften der schlagzähmodifizierten Formmassen | | |
|---|---|---|---|
| Bsp. | Probekörper gemäß Beispiel | Schlagzähigkeit (kJm⁻²) ^{a)} bei | |
| | | -30°C | -40°C |
| 20 | 16 | 28 | 25 |
| 21 | 17 | 29 | 26 |
| 22 | 18 | 23 | 22 |
| 23 | 19 | 20 | - |

| | | | |
|---|---|---|---|
| ^{a)} bestimmt nach DIN 53453 n. Ausgabe 5/75 | | | |

## Patentansprüche

1. Verfahren zur Herstellung von Homo-, Co- oder Blockcopolymerisaten, enthaltend Acrylate oder Methacrylate oder Acrylate und Methacrylate mittels anionischer Polymerisation, **dadurch gekennzeichnet, daß** als Lösungsmittel oder als Lösungsmittelkomponente olefinisch ungesättigte Verbindungen eingesetzt werden, die kein Acrylat- oder Methacrylatderivat sind.

2. Verfahren nach Anspruch 1, **dadurch gekennzeichnet, daß** als Lösungsmittel oder als Lösungsmittelkomponente vinylaromatische Verbindungen eingesetzt werden.

3. Verfahren nach den Ansprüchen 1 bis 2, **dadurch gekennzeichnet, daß** als weitere Lösungsmittelkomponente inerte aprotische polare oder unpolare Lösungsmittel eingesetzt werden.

4. Verfahren nach den Ansprüchen 1 bis 3, **dadurch gekennzeichnet, daß** als weitere Lösungsmittelkomponente Dimethoxyethan, Diethylether, Tetrahydrofuran, Toluol, Ethylbenzol oder Cyclohexan oder ein beliebiges Gemisch der genannten Lösungsmittel eingesetzt wird.

5. Verfahren nach den Ansprüchen 2 bis 4, **dadurch gekennzeichnet, daß** der Lösungsmittelanteil der Lösungsmittelkomponente der vinylaromatischen Verbindungen im Bereich von 5 bis 99 Vol.-% liegt.

6. Verfahren nach den Ansprüchen 1 bis 5, **dadurch gekennzeichnet, daß** als Lösungsmittel oder als Lösungsmittelkomponente Styrol oder mono- oder mehrfach kernsubstituiertes Styrol eingesetzt wird.

7. Verfahren nach den Ansprüchen 1 bis 6, **dadurch gekennzeichnet, daß** die Methyl-, Ethyl-, n-Propyl-, i-Propyl-, n-Butyl-, i-Butyl-, t-Butyl-, Allyl-, Cyclohexyl-, Dihydrodicyclopentadienyl-, 2-Allyloxyethyl-, 3- oder 4-Vinylbenzyl-, 2-Ethylhexylester der Acryl- oder Methacrylsäure oder ein Gemisch der genannten Verbindungen eingesetzt werden.

8. Verfahren nach den Ansprüchen 1 bis 7, **dadurch gekennzeichnet, daß** es kontinuierlich durchgeführt wird.

9. Verfahren nach den Ansprüchen 1 bis 8, **dadurch gekennzeichnet, daß** die anionische Polymerisation in Gegenwart eines Initiatorsystems bestehend aus einer Erdalkali- oder Alkalimetallalkylverbindung und einem Metallalkoholat durchgeführt wird.

10. Verfahren nach den Ansprüchen 1 bis 8, **dadurch gekennzeichnet, daß** die anionische Polymerisation in Gegenwart eines Metallocen-Initiators durchgeführt wird.

11. Verwendung der gemäß den Ansprüchen 1 bis 10 erhaltenen Reaktionsgemische für die radikalische Polymerisation.

12. Schlagzähmodifizierte thermoplastische Formmassen, **dadurch gekennzeichnet, daß** sie als Blendkomponente Blockcopolymerisate, erhältlich gemäß den Ansprüchen 1 bis 10, enthalten.

13. Verwendung der gemäß den Ansprüchen 1 bis 10 erhältlichen Blockcopolymerisate für die Herstellung schlagzähmodifizierter thermoplastischer Formmassen.

14. Verwendung der schlagzähmodifizierten thermoplastischen Formmassen gemäß Anspruch 12 zur Herstellung von Fasern, Folien und Formkörpern.

## Claims

1. A process for preparing homopolymers, copolymers or block copolymers which comprise acrylates or methacrylates or acrylates and methacrylates, by anionic polymerization, wherein olefinically unsaturated compounds which are not acrylate derivatives or methacrylate derivatives are employed as solvent or as solvent component.

2. A process as claimed in claim 1, wherein vinylaromatic compounds are employed as solvent or as solvent component.

3. A process as claimed in claim 1 or 2, wherein inert, aprotic, polar or non-polar solvents are employed as further solvent component.

4. A process as claimed in any of claims 1 to 3, wherein dimethoxyethane, diethyl ether, tetrahydrofuran, toluene, ethylbenzene or cyclohexane or any desired mixture of the abovementioned solvents is employed as further solvent component.

5. A process as claimed in any of claims 2 to 4, wherein the proportion in the solvent of the solvent component of the vinylaromatic compounds is in the range from 5 to 99% by volume.

6. A process as claimed in any of claims 1 to 5, wherein styrene or singly or multiply ring-substituted styrene is employed as solvent or as solvent component.

7. A process as claimed in any of claims 1 to 6, wherein methyl, ethyl, n-propyl isopropyl, n-butyl, isobutyl, tert-butyl, allyl, cyclohexyl, dihydrodicyclopentadienyl, 2-allyloxyethyl, 3- or 4-vinylbenzyl or 2-ethylhexyl (meth)acrylate or a mixture of the abovementioned compounds is employed.

8. A process as claimed in any of claims 1 to 7, wherein the process is carried out continuously.

9. A process as claimed in any of claims 1 to 8, wherein the anionic polymerization is carried out in the presence of an initiator system consisting of an alkaline earth metal alkyl compound or an alkali metal alkyl compound and a metal alkoxide.

10. A process as claimed in any of claims 1 to 8, wherein the anionic polymerization is carried out in the presence of a metallocene initiator.

11. The use of the reaction mixtures obtained as claimed in any of claims 1 to 10 for free-radical polymerization.

12. An impact-modified thermoplastic molding composition comprising, as blend component, block copolymers obtainable as claimed in any of claims 1 to 10.

13. The use of the block copolymers obtainable as claimed in any of claims 1 to 10 for producing impact-modified thermoplastic molding compositions.

14. The use of impact-modified thermoplastic molding compositions as claimed in claim 12 for producing fibers, films or shaped articles.

## Revendications

1. Procédé de préparation d'homopolymères, de copolymères ou de copolymères blocs, contenant des acrylates ou des méthacrylates ou des acrylates et des méthacrylates au moyen d'une polymérisation anionique, **caractérisé en ce que**, comme solvant ou comme composants de solvant, on met en oeuvre des composés oléfiniquement insaturés qui ne sont pas dérivés d'acrylate ou de méthacrylate.

2. Procédé suivant la revendication 1, **caractérisé en ce que**, comme solvant ou comme composants de solvant, on met en oeuvre des composés vinyl-aromatiques.

3. Procédé suivant l'une des revendications 1 et 2, **caractérisé en ce que**, comme autres composants de solvant, on met en oeuvre des solvants polaires ou non polaires, aprotiques, inertes.

4. Procédé suivant l'une des revendications 1 à 3, **caractérisé en ce que**, comme autres composants de solvant, on met en oeuvre du diméthoxyéthane, de l'éther diéthylique, du tétrahydrofuranne, du toluène, de l'éthylbenzène ou du cyclohexane ou un mélange quelconque des solvants cités.

5. Procédé suivant l'une des revendications 2 à 4, **caractérisé en ce que** la fraction des composants de solvant des composés vinyl-aromatiques est de l'ordre de 5 à 99% en volume.

6. Procédé suivant l'une des revendications 1 à 5, **caractérisé en ce que**, comme solvant ou comme composants de solvant, on met en oeuvre du styrène ou du styrène substitué dans le noyau à une ou à plusieurs reprises.

7. Procédé suivant l'une des revendications 1 à 6, **caractérisé en ce qu'**on met en oeuvre les esters méthylique, éthylique, n-propylique, i-propylique, n-butylique, i-butylique, t-butylique, allylique, cyclohexylique, dihydrodicyclopentadiénylique, 2-allyloxyéthylique, 3- ou 4-vinylbenzylique, 2-éthylhexylique de l'acide acrylique ou de l'acide méthacrylique ou un mélange des composés cités.

8. Procédé suivant l'une des revendications 1 à 7, **caractérisé en ce qu'**il est effectué en continu.

9. Procédé suivant l'une des revendications 1 à 8, **caractérisé en ce que** la polymérisation anionique est effectuée en présence d'un système d'amorceur constitué d'un composé alkylique de métal alcalino-terreux ou alcalin et d'un alcoolate de métal.

10. Procédé suivant l'une des revendications 1 à 8, **caractérisé en ce que** la polymérisation anionique est effectuée en présence d'un amorceur à base de métallocène.

11. Utilisation des mélanges réactionnels obtenus suivant l'une des revendications 1 à 10 pour la polymérisation radicalaire.

12. Masses de moulage thermoplastiques modifiées quant à la résistance aux chocs, **caractérisées en ce qu'**elles contiennent, comme composants de mélange, des copolymères blocs que l'on peut obtenir suivant l'une des revendications 1 à 10.

13. Utilisation des copolymères blocs que l'on peut obtenir suivant l'une des revendications 1 à 10, pour la préparation de masses de moulage thermoplastiques modifiées quant à la résistance aux chocs.

14. Utilisation des masses de moulage thermoplastiques modifiées quant à la résistance aux chocs suivant la revendication 12, pour la fabrication de fibres, de feuilles et de corps façonnés.
